(19) Europäisches Patentamt
European Patent Office
Office européen des brevets

(11) **EP 1 745 337 B1**

(12) **EUROPÄISCHE PATENTSCHRIFT**

(45) Veröffentlichungstag und Bekanntmachung des Hinweises auf die Patenterteilung:
**14.04.2010 Patentblatt 2010/15**

(51) Int Cl.:
***G05B 19/4061*** *(2006.01)*

(21) Anmeldenummer: **05732114.3**

(22) Anmeldetag: **12.02.2005**

(86) Internationale Anmeldenummer:
**PCT/DE2005/000244**

(87) Internationale Veröffentlichungsnummer:
**WO 2005/111748 (24.11.2005 Gazette 2005/47)**

(54) **VERFAHREN UND SCHALTUNGSANORDNUNG ZUR ELEKTRISCHEN STEUERUNG UND/ODER REGELUNG DER BEWEGUNG EINES ELEKTRISCH BETRIEBENEN AGGREGATS**

METHOD AND CIRCUIT ARRANGEMENT FOR ELECTRICAL CONTROL AND/OR REGULATION OF THE MOVEMENT OF AN ELECTRICALLY-DRIVEN UNIT

PROCEDE ET CIRCUIT POUR LA COMMANDE ET/OU LA REGULATION ELECTRIQUE DU MOUVEMENT D'UN GROUPE COMMANDE ELECTRONIQUEMENT

(84) Benannte Vertragsstaaten:
**DE ES FR GB IT SE**

(30) Priorität: **08.05.2004 DE 102004022807**

(43) Veröffentlichungstag der Anmeldung:
**24.01.2007 Patentblatt 2007/04**

(73) Patentinhaber: **Conti Temic microelectronic GmbH**
**90411 Nürnberg (DE)**

(72) Erfinder:
• **ÖXLE, Thomas**
**88677 Markdorf (DE)**
• **SCHULTER, Wolfgang**
**88709 Meersburg (DE)**

(56) Entgegenhaltungen:
| | |
|---|---|
| WO-A-00/17982 | WO-A-00/43227 |
| DE-A1- 4 442 171 | DE-A1- 10 149 578 |
| DE-A1- 10 318 396 | DE-A1- 19 751 676 |
| DE-C1- 19 729 238 | |

## EP 1 745 337 B1

**Beschreibung**

Das Verfahren und die Schaltungsanordnung bezieht sich auf die Erkennung von Einklemmsituationen bei elektrisch angetriebenen Aggregaten oder Verstellantrieben in Kraftfahrzeugen, wie z.B. Fensterheber, Schiebedächer oder Sitzverstelleinrichtungen.

Für solche Verstellantriebe gibt es diverse Vorschriften und Richtlinien, z.B. die EG-Richtlinie 74/60/EWG der Europäischen Union, die EC21 von der UNECE (United Nations Economic Commission for Europe), die FMVSS118 von der amerikanischen National Highway Traffic Safety Administration und andere. All diese Vorschriften fordern unter bestimmten Betriebs- und Prüfbedingungen eine Begrenzung der Einklemmkraft auf maximal 100 Newton.

Aus der DE 44 42 171 A1 ist ein Verfahren bekannt, bei dem zur Erkennung von Einklemmsituationen die Betriebsparameter des elektrischen Motors kontinuierlich zu zeitlich äquidistanten Messzeitpunkten erfasst werden und daraus die Verstellkraft ermittelt wird.

Üblicherweise werden bei Verstellantrieben in Kraftfahrzeugen bürstenkommutierte Gleichstrommotoren mit zwei magnetischen Polen eingesetzt. Durch die Kommutierung entstehen auf dem Motorstromsignal sogenannte Stromrippels. Bei jeder Stromwendung (Kommutierung) entsteht ein Rippel.

Darüber hinaus weist die Bordnetzspannung eines Kraftfahrzeuges bei bestimmten Betriebsbedingungen ebenfalls Wechselanteile auf. Diese Wechselanteile der Motorspannung bewirken zusätzliche Wechselanteile im Motorstrom.

Es entspricht dem allgemeinen Stand der Technik, dass ein kontinuierliches Signal vor der zeitlich äquidistanten Abtastung mit einem Tiefpass gefiltert wird, dessen Grenzfrequenz unterhalb der halben Abtastfrequenz liegt. Dies ist nach dem allgemein bekannten Abtasttheorem von Shannon erforderlich um sogenannte. Aliasing-Effekte zu verhindern. Die Nutzahl der eingesetzten Motoren liegt üblicherweise im Bereich 8 bis 12. Bei einem 10-nutigen Motor entstehen somit 10 Stromrippels pro Umdrehung. Auf dem Motorstromsignal überlagert sich somit ein Wechselstromsignal mit einer Frequenz von 10 mal der Drehzahl. Die Drehzahl des Rotors liegt je nach Belastung und Betriebsspannung typischerweise in einem Bereich zwischen 10 und 80 Umdrehungen pro Sekunde. Somit liegen die durch die Stromwendung verursachten Wechselanteile im Motorstrom im Frequenzbereich zwischen 100 und 800 Hz.

Die durch Einklemmsituationen verursachten Änderungen des Motorstroms liegen typischerweise in einem Frequenzbereich kleiner 20 Hz.

Die durch die Stromwendung verursachten Anteile werden üblicherweise mit Hilfe einer Tiefpassanordnung unterdrückt. Durch diese Tiefpassanordnung werden auch die höherfrequenten Anteile der durch Bordnetzspannungswelligkeiten verursachten Wechselanteile im Motorstrom unterdrückt. Um z.B. die Stromwelligkeiten bei 100 Hz stark genug zu dämpfen, muss die Grenzfrequenz des Tiefpassfilters deutlich unter 100 Hz gewählt werden.

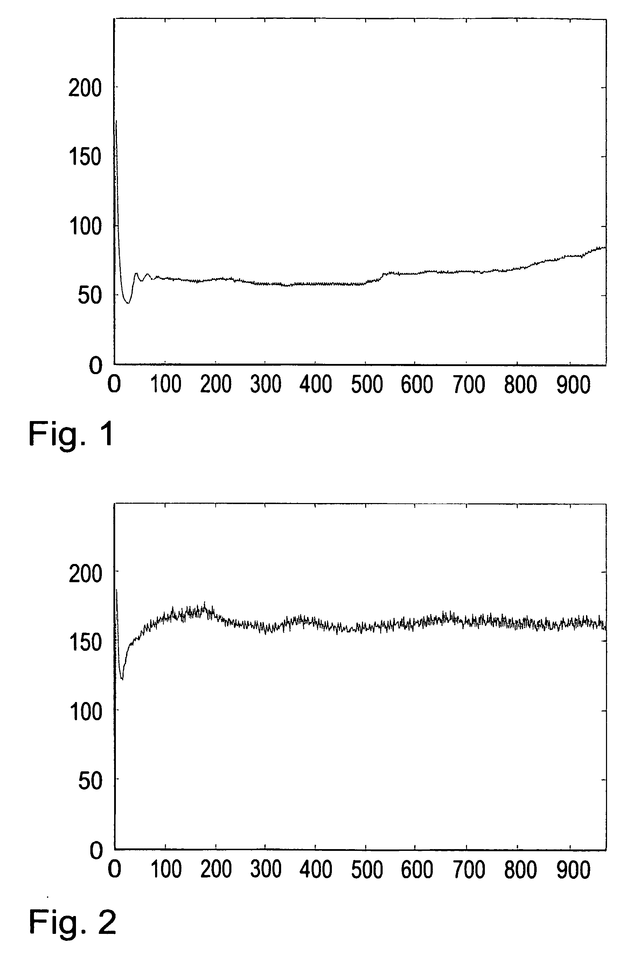

Bei einem Einklemmfall kommt es zu einem Anstieg der Verstellkraft und dadurch zu einem Anstieg des Motorstroms. Durch die Tiefpassfilterung kommt es nachteiliger Weise, wie in Figur 2 gezeigt, zu einem verzögerten Anstieg des gefilterten Stroms und dadurch letztendlich zu einer verzögerten Erkennung von Einklemmfällen und dadurch zu höheren Klemmkräften.

Da die Wechselanteile unter bestimmten Betriebsbedingungen sehr groß sind, wird üblicherweise die Unterdrückung im Frequenzbereich der störenden Wechselanteile sehr groß gewählt. Dies wird entweder durch entsprechend niedrige Grenzfrequenzen oder durch entsprechend hohe Filterordnungen realisiert. Niedrige Grenzfrequenzen und hohe Filterordnungen haben aber den Nachteil der erhöhten Verzögerungszeit.

Aus WO /17982 A1 ist ein Verfahren zur elektrischen Steuerung und Regelung der Bewegung eines elektrisch betriebenen Aggregats eines Kraftfahrzeugs, insbesondere eines Fensterhebers oder Schiebedachs, bekannt, bei dem eine Korrelationsgröße für die Verstellkraft des Aggregats gemessen wird und zwecks eines Einklemmschutzes eine Abschaltung oder Reversierung einer Verstellbewegung erfolgt, sofern die Verstellkraft einen Grenzwert, der der maximal Kraftfahrzeugs automatisch erhöht. Hierzu wird ein Schlechtwegstreckenfilter deaktiviert, so dass im Einklemmfall ein Abschalten oder Reversieren einer Verstellbewegung ohne zeitliche Verzögerung erfolgt.

Aus DE 197 29 238 C1 ist ein Verfahren zum Ermitteln der Drehzahl und/oder des Drehwinkels bei mechanisch kommutierten Gleichstrommotoren bekannt. Hierbei wird die aus dem Zeitverlauf der bei der Kommutierung auftretenden Welligkeit des Motorstroms durch ein parallel dazu arbeitendes Motorzustandsmodell ergänzt und kontrolliert. Aus dem Motorstrom und der Motorspannung wird ein wahrscheinlicher Wert der aktuellen Drehzahl extrapoliert sowie ein zulässiger Soll-Wertebereich der nächsten Kommutierung bestimmt. Kann im Soll-Wertebereich kein Kommutierungszeitpunkt bestimmt werden, wird der extrapolierte Wert verwendet. Anderenfalls wird aus dem im Soll-Wertebereich erfassten Kommutierungszeitpunkt die aktuelle Drehzahl genau bestimmt. Die für das Motorzustandsmodell erforderliche motorspezifische und lastabhängige Größe kann fest vorgegeben werden oder nach der Detektion von Kommutierungsvorgängen jeweils an die aktuelle Drehzahl angepasst werden. Störungen bei der Erfassung und Auswertung der bei der Kommutierung auftretenden Welligkeit (Ripple) des Motorstroms können vermieden und die für eine Positionsermittlung und -steuerung von elektrisch betriebenen Teilen erforderliche störsichere Weiterleitung der aktuellen Werte sichergestellt werden.

Aus WO 00/43277 A1 ist ein Verfahren zum Betreiben eines Verstellantriebs in einem Kraftfahrzeug bekannt, mit den Schritten des Messens einer von einem Verstellantrieb ausgeübten Betätigungskraft, des Vergleichens einer Betätigungskraft mit einer Grenzkraft, und des Reversierens eines Verstellantriebs, wenn die Grenzkraft überschritten wird. Im weiteren ist vorgesehen, dass die gemessenen Werte der Betätigungskraft vor dem Vergleichen nach einer ersten Methode gefiltert werden, um schnelle der Betätigungskraft mit dem vom Verstellantrieb zurückgelegten Weg zu unterdrücken, wenn das Kraftfahrzeug fährt, und nach einer zweiten Methode, bei der schnelle Änderungen weniger stark unterdrückt werden als bei der ersten Methode, oder gar nicht gefiltert werden, wenn das Kraftfahrzeug mit ausgeschaltetem Motor steht.

Aufgabe der Erfindung ist es, ein Verfahren und eine Schaltungsanordnung zur Steuerung und/oder Regelung der Bewegung eines elektrisch betriebenen Aggregats mit einem Einklemmschutz mit möglichst niedrigen Klemmkräften und gleichzeitig einer ausreichenden Robustheit gegenüber Störeinflüssen anzugeben.

Hinsichtlich des Verfahrens wird die Aufgabe erfindungsgemäß durch die Merkmale des Patentanspruchs 1 und hinsichtlich der Schaltungsanordnung durch die Merkmale des Patentanspruchs 18 gelöst. Vorteilhafte Weiterbildungen der Erfindung sind Gegenstand der Unteransprüche.

Für ein die jeweilige Situation berücksichtigendes Verfahren zum Betrieb des Aggregats oder eines Verstellantriebs mit möglichst gutem Einklemmschutz wird eine Korrelationsgröße für die Verstellkraft des Aggregats ermittelt und in Abhängigkeit vom Wert der Korrelationsgröße eine Abschaltung oder Reversierung der Verstellbewegung des Aggregats ausgelöst, wobei die Korrelationsgröße zeitweise gefiltert wird. Unter einer zeitweisen Filterung der Korrelationsgröße wird insbesondere eine situationsbedingte und/oder über eine vorgebbare begrenzte Zeit ausgeführte Filterung der Korrelationsgröße während des Betriebs des elektrisch betriebenen Aggregats verstanden. Mit anderen Worten: Als Eingangsgröße für die Erkennung einer Einklemmsituation beim elektrisch betriebenen Aggregat oder Antrieb wird eine gefilterte oder eine ungefilterte Korrelationsgröße verwendet. Hierdurch wird unter bestimmten, insbesondere vorgebbaren Bedingungen bei der Erkennung einer Einklemmsituation die zeitliche Verzögerung durch ein Filter umgangen, indem die ungefilterte Korrelationsgröße verwendet wird. Dadurch können insbesondere bei schnellen Verstellgeschwindigkeiten niedrigere Klemmkräfte erzielt werden. Des Weiteren lassen sich bei der Klemmung von sehr harten Objekten niedrigere Klemmkräfte erreichen. Darüber hinaus wird zur Erkennung von durch Auslösen des Aggregats bedingten Einklemmsituationen beispielsweise in Abhängigkeit von einer die Intensität der Wechselsignalanteile der Korrelationsgröße kennzeichnenden Größe und/oder einer die Bordnetzspannungswelligkeit kennzeichnenden Größe und/oder einer die Drehzahl des Aggregats kennzeichnenden Größe eine gefilterte oder eine ungefilterte Korrelationsgröße verwendet.

Beispielsweise wird als Korrelationsgröße für die Verstellkraft bei einem Fensterheber oder einem Schiebedach ein Motorstromsignal des die Verstellkraft des Fensterhebers oder des Schiebedachs bewirkenden Verstellmotors oder Rotors herangezogen. Alternativ oder zusätzlich wird bei diesen Anwendungsfällen zur Berechnung der Korrelationsgröße die Drehzahl des Aggregats oder Verstellmotors und/oder die Bordnetzspannung und/oder der elektrische Widerstand und/oder die Induktivität des Aggregats und/oder die Temperatur, d.h. die Aggregatetemperatur, und/oder eine Maschinen- oder Aggregatekonstante und/oder der magnetische Fluss und/oder eine Kennlinie des Aggregats verwendet.

In einer weiteren Ausführungsform wird anhand der Fahrzeuggeschwindigkeit, des Zustands des Fahrzeug-Antriebsmotors und/oder der Drehzahl des Fahrzeug-Antriebsmotors eine die Intensität der Bordnetzspannungswelligkeit kennzeichnenden Größe ermittelt. Auch kann der Zustand der Zündung des Fahrzeugs und/oder ein im Zündschloss eingesteckter Zündschlüssel zur Ermittlung einer die Intensität der Bordnetzspannungswelligkeit kennzeichnenden Größe herangezogen werden.

Zweckmäßigerweise wird ein Wechselsignalanteil von der ermittelten Korrelationsgröße bestimmt und in Abhängigkeit von diesem Wechselsignalanteil über die Aktivierung und Deaktivierung des Filters entschieden. Mit anderen Worten: Mittels der Korrelationsgröße wird anhand eines dieser kennzeichnenden Merkmale, z. B. eines Wechselsignalanteils, der Filter gesteuert, d.h. aktiviert oder deaktiviert. Zusätzlich kann der Filter bei Vorliegen einer vorgegebenen Betriebsbedingung des Aggregats und/oder des Fahrzeugs, z. B. bei Stillstand des Fahrzeugs oder bei einer vorgegebenen Fahrzeuggeschwindigkeit, aktiviert oder deaktiviert werden.

Vorzugsweise wird anhand einer die Intensität der Wechselsignalanteile der Korrelationsgröße und/oder der die die Intensität der Bordnetzspannungswelligkeit kennzeichnenden Größe und/oder der die Drehzahl des Aggregats oder Antriebsmotors kennzeichnenden Größe entschieden, ob zur Erkennung einer Einklemmsituation direkt die ermittelte und ungefilterte Korrelationsgröße oder die gefilterte Korrelationsgröße herangezogen wird.

Die Intensität der Wechselsignalanteile wird bevorzugt anhand der Amplitude und/oder der Funktion des Hochpass gefilterten Eingangssignals ermittelt. Zur Bestimmung der Amplitude wird beispielsweise der maximale Wert aus einer vorgegebenen Anzahl von Hochpass gefilterten Mess- oder Eingangswerten des Eingangssignals bestimmt. Zur Bestimmung der Funktion wird zum Beispiel die gemittelte Leistung aus einer vorgegebenen Anzahl von Hochpass gefilterten oder Bandpass gefilterten Eingangswerten bestimmt.

Hinsichtlich einer Schaltungsanordnung zur elektrischen Steuerung und/oder Regelung der Bewegung eines elektrisch betriebenen Aggregats umfasst diese eine Erfassungseinheit zur Ermittlung einer Korrelationsgröße für die Verstellkraft des Aggregats und eine Verstelleinrichtung zur Abschaltung oder Reversierung einer Verstellbewegung des Aggregats in Abhängigkeit vom Wert der Korrelationsgröße zwecks eines Einklemmschutzes, wobei zwischen der Erfassungseinheit und der Verstelleinrichtung eine Filteranordnung zur zeitweisen Filterung der Korrelationsgröße angeordnet ist. Für eine zeitweise Filterung der Korrelationsgröße ist dabei in einer möglichst einfachen Ausführungsform der Filteranordnung ein steuerbares Filter vorgesehen. Das steuerbare Filter wird dabei mittels eines Ausgangssignals eines Schwellenvergleichers aktiviert oder deaktiviert.

In einer möglichen Ausführungsform zur mittelbaren Steuerung des Filters wird mittels des Ausgangssignals des Schwellenvergleichers ein Schalter betätigt, der der Verstelleinrichtung die anhand des Filters gefilterte oder ungefilterte Korrelationsgröße zuführt. Dem Schwellenvergleicher werden zur Steuerung des Schalters beispielsweise die Korrelationsgröße und/oder deren Wechselsignalanteile und/oder die Drehzahl des Verstellmotors und/oder eine die Bordnetzspannungswelligkeit kennzeichnende Größe zugeführt.

Die mit der Erfindung erzielten Vorteile bestehen insbesondere darin, dass mittels einer steuerbaren Filterung von einklemmrelevanten Größen anhand der steuerbaren Filterung einer Korrelationsgröße eine Verzögerung in der Identifizierung eines Einklemmfalls sicher vermieden sind. Zudem wird durch die Steuerung der Filterung, insbesondere durch eine Deaktivierung der Filterung der Korrelationsgröße eine Einklemmsituation unmittelbar und somit schnell und einfach identifiziert.

Die Erfindung wird nachfolgend anhand von Ausführungsbeispielen und Figuren beschrieben. Es zeigen:

Figur 1    Zeitlicher Verlauf des Motorstromsignals eines Aggregats, z. B. eines Verstellmotors bei geringer Belastung und hoher Drehzahl,

Figur 2    Zeitlicher Verlauf des Motorstromsignals bei höherer Belastung und niedriger Drehzahl,

Figur 3    Zeitlicher Verlauf des Motorstromsignals bei einem Einklemmfall (Signal A) sowie zeitlicher Verlauf des mit einem Tiefpass erster Ordnung gefilterten Motorstromsignals (Signal B) bei einem Einklemmfall,

Figur 4    schematisch eine Schaltungsanordnung zur Steuerung und/oder Regelung des Aggregats, z. B. eines Verstellmotors, mit einer Erfassungseinheit für eine einklemmrelevante Größe und einer Verstelleinrichtung für das Aggregat und einer dazwischen angeordneten Filteranordnung unter Berücksichtigung der direkt gemessenen Drehzahl des Aggregats,

Figur 5    schematisch eine weitere Ausführungsform einer Schaltungsanordnung zur Steuerung und Regelung des Aggregats mit einer Erfassungseinheit für eine einklemmrelevante Größe und einer Verstelleinrichtung für das Aggregat und einer dazwischen angeordneten Filteranordnung ohne direkte Messung der Drehzahl des Aggregats,

Figur 6    schematisch im Detail eine Filteranordnung, und

Figur 7    schematisch ein Detail der Filteranordnung.

Einander entsprechende Teile sind in allen Figuren mit den gleichen Bezugszeichen versehen.

Figur 1 zeigt einen zeitlichen Verlauf eines Motorstromsignals I eines Aggregats, z. B. eines Verstellmotors für einen Fensterheber oder ein Schiebedach bei geringer Belastung und hoher Drehzahl. Man erkennt nur eine geringe Stromwelligkeit. Figur 2 zeigt einen zeitlichen Verlauf des Motorstromsignals I bei höherer Belastung und niedriger Drehzahl. Man erkennt eine deutlich höhere Stromwelligkeit gegenüber der Stromwelligkeit gemäß Figur 1.

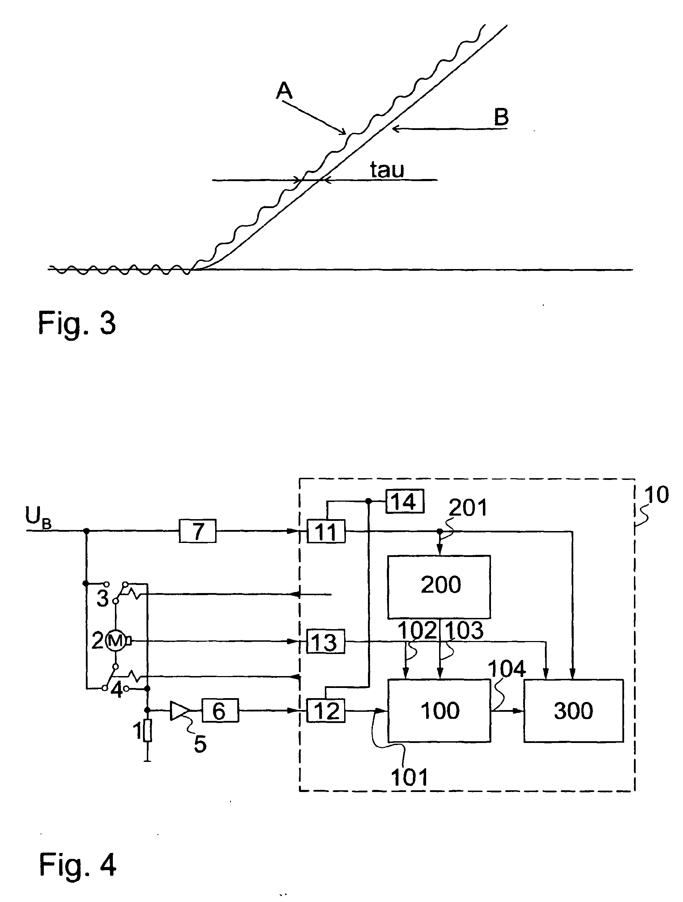

Figur 3 zeigt einen zeitlicher Verlauf eines ungefilterten Motorstromsignals $I_A$ bei einem Einklemmfall (Signal A) sowie einen zeitlichen Verlauf eines mit einem Tiefpass erster Ordnung gefilterten Motorstromsignals $I_B$ (Signal B) bei einem Einklemmfall. Man erkennt den durch die Filterung verursachten zeitlich verzögerten Anstieg des gefilterten Motorstromsignals $I_B$.

Das Filter erster Ordnung wird durch die Übertragungsfunktion H definiert gemäß:

$$H(f) = \frac{k}{1 + j\dfrac{f}{fg}} \qquad\qquad [1]$$

mit k = Proportionalitätsfaktor, f = Frequenz, fg = Grenzfrequenz. Die eingezeichnete Verzögerungszeit $\tau$ (= tau) wird durch folgende Formel bestimmt:

$$\tau = \frac{1}{2 * \pi * fg} \qquad [2]$$

Nachfolgend wird anhand der Figuren 4 bis 7 eine Schaltungsanordnung 1 zur elektrischen Steuerung und/ oder Regelung der Bewegung eines elektrisch betriebenen Aggregats 2, z. B. eines Verstellmotors für ein Fensterheber oder ein Schiebedach, näher beschrieben.

In Figur 4 ist ein Ausschnitt einer Antriebssteuerung oder der Schaltungsanordnung SA als Blockdiagramm dargestellt.

Die Schaltungsanordnung SA umfasst eine Erfassungseinheit 1 zur Erfassung des Motorstromsignals I für die Verstellkraft eines Aggregats 2, z. B. eines Verstell- oder Antriebsmotors M. Als Erfassungseinheit 1 dient beispielsweise ein Widerstand zur Ermittlung des Motorstromsignals I des Aggregats 2. Zur Motoransteuerung des Aggregats 2 sind zwei Relais 3 und 4 vorgesehen.

Zur Berücksichtigung der Korrelationsgröße K bei der Ermittlung der Verstellkraft des Aggregats 2 ist ein Verstärker 5, insbesondere ein Signalverstärker zur Verstärkung des Eingangssignals, d.h. des Motorstroms I, vorgesehen. Zur Vermeidung von Aliasing-Effekten bei einer nachgeschalteten Abtastung des Motorstromsignals I ist dem Verstärker 5 ein Tiefpass 6 nachgeschaltet.

Neben dem Motorstrom I wird mittels der Schaltungsanordnung SA auch die Bordnetzspannung $U_B$ erfasst. Zur Vermeidung von Aliasing-Effekten bei der nachgeschalteten Abtastung der Bordnetzspannung $U_B$ ist ein Tiefpass 7 vorgesehen.

Die Bordnetzspannung $U_B$ und das Motorstromsignal I werden anschließend einer Antriebssteuerung 10 der Schaltungsanordnung SA zur Steuerung und/oder Regelung des Aggregats 2 zugeführt. Zusätzlich oder alternativ kann die Drehzahl n des Aggregats 2 erfasst und der Antriebssteuerung 10 zugeführt werden.

Die Antriebssteuerung 10 umfasst zur Abtastung der erfassten Signale, d.h. der Bordnetzspannung UB und/ oder des Motorstroms I, jeweils ein zugehöriges Abtastglied 11 bzw. 12. Zur Abtast-Takterzeugung ist des Weiteren ein Taktgenerator 14 vorgesehen, der mit den Abtastgliedern 11 und 12 verbunden ist. Zur Erfassung der Drehzahl n des Aggregats 2 umfasst die Antriebssteuerung 10 eine Erfassungseinheit 13.

Zur Bestimmung der Verstellkraft des Aggregats 2 umfasst die Antriebssteuerung 10 zum einen eine Filteranordnung 100 und eine dieser nachgeschaltete Verstelleinrichtung 300 zur Erkennung einer Einklemmsituation und einer entsprechenden Steuerung des Aggregats 2. Zum anderen ist zur Bestimmung der Wechselsignalanteile der Bordnetzspannung $U_B$ das Abtastglied 11 mit einer weiteren Erfassungseinheit 200 zur Ermittlung der Bordnetzspannungswelligkeit verbunden. Dabei dient die Filteranordnung 100 der Filterung der Korrelationsgröße K, insbesondere des Motorstromsignals I und somit der Stromfilterung zur Unterdrückung von Wechselsignalanteilen, die durch Stromwendung und Bordnetzstörungen verursacht werden. Die Filteranordnung 100 ist zwischen den Erfassungseinheiten 1, 13 und/ oder 200 und der Verstelleinrichtung 300 geschaltet.

Je nach Art und Ausbildung der Antriebssteuerung 10 kann der Filteranordnung 100 ein weiteres Modul 100a zur Bildung und Ermittlung der Korrelationsgröße K vorgeschaltet sein. Beispielsweise kann die Korrelationsgröße K auch anhand mindestens einer der nachfolgenden oder anhand von mehreren Parametern P1 bis Pn bestimmt werden. Als Parameter P1 bis Pn dienen beispielsweise die Bordnetzspannung $U_B$, der elektrische Widerstand und/oder die Induktivität des Aggregats 2, die Temperatur und/oder eine Maschinenkonstante des Aggregats 2, der magnetische Fluss und/oder eine Kennlinie des Aggregats 2. Eine derart indirekt ermittelte Korrelationsgröße K wird als ungefilterte Korrelationsgröße 101 der Filteranordnung 100 zugeführt.

Im Betrieb der Antriebssteuerung 10 wird der Erfassungseinheit 200 zur Ermittlung der Bordnetzspannungswelligkeit und der Verstelleinrichtung 300 die Bordnetzspannung $U_B$ als abgetastetes Bordspannungssignal 201 zugeführt. Die Erfassungseinheit 200 ermittelt anhand des Bordspannungssignals 201 und/oder weiterer Betriebssignale, z. B. Zustand der Zündung, des Fahrzeug-Antriebsmotors, der Drehzahl des Fahrzeug-Antriebsmotors und/oder der Fahrgeschwindigkeit, ein die Intensität der Wechselspannungsanteile kennzeichnendes Signal 103, das der Filteranordnung 100 zugeführt wird.

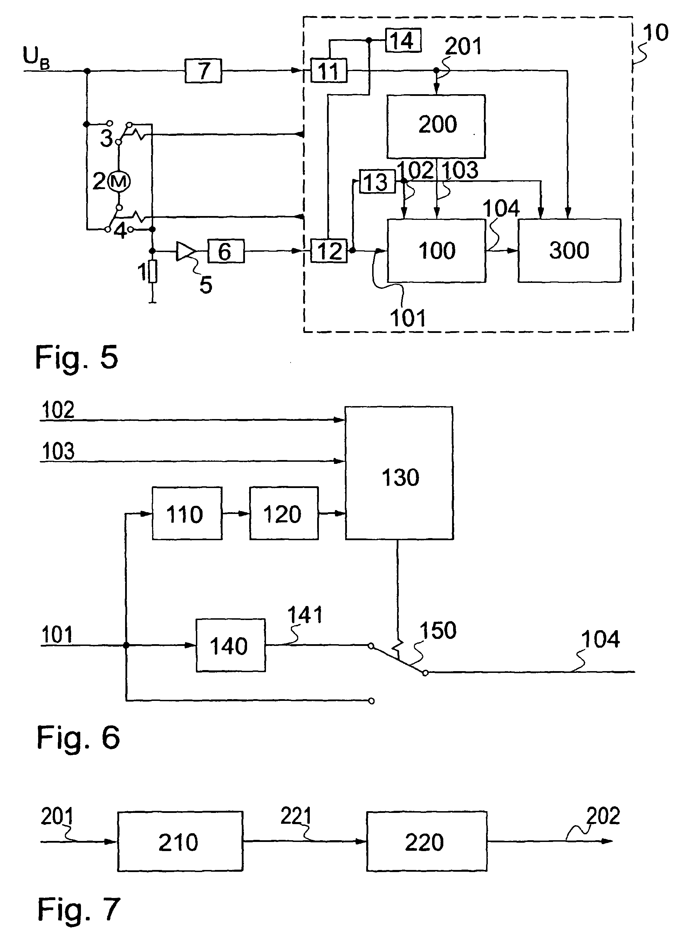

Eine die Drehzahl n des Rotors oder Aggregats 2 kennzeichnende Größe 102 wird ebenfalls der Filteranordnung 100 zugeführt. Anhand der die Drehzahl n kennzeichnenden Größe 102 und des die Intensität der Wechselspannungsanteile kennzeichnenden Signals 103 sowie anhand des abgetasteten Motorstromsignals I und der daraus resultierenden ungefilterten Korrelationsgröße 101 wird mittels der Filteranordnung 100 ein Steuersignal 104 bestimmt, dass der Verstelleinrichtung 300 zur Erkennung einer Einklemmsituation des Aggregats 2 zugeführt wird. Die Filteranordnung 100 ist somit steuerbar, d.h. in Abhängigkeit von den der Filteranordnung 100 zugeführten Signale 101, 102 und/oder 103 wird der Verstelleinrichtung 300 als Steuersignal 104 eine gefilterte Korrelationsgröße 141 oder eine ungefilterte Korrelationsgröße 101 zugeführt, wie dies in Figur 6 näher dargestellt ist.

In Figur 5 ist eine alternative Ausführungsform für eine Schaltungsanordnung SA als Blockdiagramm dargestellt. Dabei wird die Drehzahl n des Aggregats 2 mittels der Erfassungseinheit 13 aus der Stromwelligkeit des Motorstromsignals I ermittelt. Hierzu ist die Erfassungseinheit 13 eingangsseitig mit dem Ausgang des Abtastglieds 12 für das abgetastete Motorstromsignal 101 verbunden.

In Figur 6 ist im Detail die Filteranordnung 100 zur Filterung der ungefilterten Korrelationsgröße 101 dargestellt. Der Filteranordnung 100 wird als ungefilterte Korrelationsgröße 101 beispielsweise das Motorstromsignals I, insbesondere das abgetastete Motorstromsignal I oder eine anhand der Parameter P1 bis Pn, z. B. der Bordnetzspannung $U_B$, des elektrischen Widerstands, der Induktivität und/oder der Temperatur und/oder anderer Parameter des Aggregats, ermittelte Korrelationsgröße K zugeführt. Darüber hinaus wird der Filteranordnung 100 ein die Drehzahl n des Rotors oder Aggregats 2 kennzeichnendes Signal 102 und/oder das die Intensität der Wechselspannungsanteile der Bordnetzspannung $U_B$ kennzeichnende Signal 103 zugeführt.

Das abgetastete Motorstromsignal 101 wird beispielsweise direkt als Korrelationsgröße K herangezogen. Hierzu wird das abgetastete Motorstromsignal 101 einem Wechselstromfilter 110 zur Filterung und Bestimmung der Wechselsignalanteile, insbesondere der Wechselstromanteile des abgetasteten Motorstromsignals 101 zugeführt. Der Wechselstromfilter 110 ist beispielsweise ein Hochpass- oder Bandpassfilter. Dem Wechselstromfilter 110 ist ein Intensitätsmesser 120 nachgeschaltet, mittels dessen die Intensität der Wechselstromanteile bestimmt werden. Beispielsweise wird zur Ermittlung der Intensität der Wechselstromanteile die Amplitude, z. B. der maximale Wert aus einer bestimmten Anzahl von Eingangswerten, oder eine Funktion, z. B. die gemittelte Leistung oder Amplitudenmittelwert aus einer bestimmten Anzahl von Eingangswerten, bestimmt. Ausgangsseitig wird eine die Intensität der Wechselstromanteile kennzeichnende Größe einem Schwellenvergleicher 130 zugeführt.

Zur Berücksichtigung weiterer Kenngrößen bei der Ermittlung einer Einklemmsituation wird dem Schwellenvergleicher 130 das die Drehzahl n repräsentierende Signal 102 und das die Intensität der Bordnetzspannungswelligkeit repräsentierende Signal 103 zugeführt. Diese werden mittels des Schwellenvergleichers 130 zu einem Steuersignal SS für einen Schalter 150 verarbeitet, der der Verstelleinrichtung 300 entweder die mittels eines Filters 140 zur Unterdrückung der durch Bordnetzspannungswelligkeit und Stromwendung verursachten Welligkeiten gefilterte Korrelationsgröße 141 oder die ungefilterte, abgetastete Korrelationsgröße 101, z. B. das Motorstromsignal I als Signal 104 zuführt. Der Filter 140 ist als Tiefpass- oder Bandpassfilter ausgeführt.

In Figur 7 ist eine Ausführungsform für die Erfassungseinheit 200 zur Ermittlung der Bordnetzspannungswelligkeit dargestellt. Die Erfassungseinheit 200 umfasst einen Wechselspannungsfilter 210 und einen Intensitätsmesser 220. Es wird darauf hingewiesen, dass diese Ausführung der Erfassungseinheit 200 nur eine von den verschiedenen im Patent angegebenen Möglichkeiten ist, um ein die Intensität der Wechselanteile der Bordnetzspannung $U_B$ kennzeichnendes Signal 202 zu erzeugen, das der Filteranordnung 100 als Signal 103 zugeführt wird.

Nachfolgend wird die Schaltungsanordnung SA im Betrieb näher erläutert.

**Ermittlung der Störungen in der Korrelationsgröße**

In einem ersten Ausführungsbeispiel werden die Störungen der Korrelationsgröße K, z. B. des Motorstromsignals I, wie folgt ermittelt. Durch das Wechselstromfilter 110, z. B. ein Hochpass- oder Bandpassfilter, werden die störenden Wechselanteile aus dem gemessenen Motorstromsignal 101 extrahiert und aus diesen mittels des Intensitätsmessers 120 ein die Intensität der Wechselanteile kennzeichnendes Signal 122 generiert. Dieser Intensitätsmesser 120 kann z.B. durch einen Amplitudendetektor realisiert werden, der den maximalen Wert aus einer bestimmten Anzahl von Messwerten ausgibt. Eine andere Möglichkeit ist der Einsatz eines Leistungsmessers, der die über eine bestimmte Anzahl von Messwerten gemittelte Leistung ausgibt. Die zu dieser Berechnung herangezogene abgetastete und ungefilterte Korrelationsgröße 101 wird in einer speziellen Ausgestaltung des Ausführungsbeispiels um eine bestimmte Anzahl von Abtastintervallen verzögert.

Untersuchungen haben gezeigt, dass die Amplitude des Wechselsignalanteils der ungefilterten Korrelationsgröße 101, welche durch die Stromwendung durch die Bürsten im Motor M verursacht wird, von der Amplitude des Gleichstromanteils und von der Drehzahl n abhängt. Je größer die Amplitude des Gleichstromanteils und je kleiner die Drehzahl n des Rotors, desto größer ist die Amplitude des Wechselsignalanteils der ungefilterten Korrelationsgröße 101. Somit wird in einem weiteren Ausführungsbeispiel das die Intensität der Wechselsignalanteile kennzeichnende Signal 122 durch Multiplikation der Amplitude des Gleichstromanteils mit einem Proportionalitätsfaktor k generiert.

In einem weiteren Ausführungsbeispiel wird das die Intensität der Wechselsignalanteile kennzeichnende Signal 122 durch Division eines vorgegebenen Wertes durch die die Drehzahl n des Rotors kennzeichnende Größe 102 generiert. Der Vorteil der beiden letztgenannten Ausführungsbeispiele liegt darin, dass kein Wechselstromfilter 110 und somit kein Hochpass oder Bandpass und kein Leistungs- oder Intensitätsmesser 120 benötigt wird und dadurch eine kostengünstigere Realisierung möglich ist.

**Ermittlung der Störungen auf dem Bordnetz**

In einem weiteren Ausführungsbeispiel werden die Störungen auf dem Bordnetz wie folgt ermittelt. Durch ein Wechselspannungsfilter 210 werden die störenden Wechselspannungsanteile aus dem gemessenen Bordspannungssignal 201 als Signal 221 extrahiert und aus diesen mittels eines Intensitätsmessers 220 ein die Intensität der Wechselspannungsanteile kennzeichnendes Signal 202 generiert, das der Filteranordnung als Signal 103 zugeführt wird. Dieser Intensitätsmesser 220 kann z.B. durch einen Amplitudendetektor realisiert werden, der den maximalen Wert aus einer bestimmten Anzahl von Messwerten ausgibt. Eine andere Möglichkeit ist der Einsatz eines Leistungsmessers, der die über eine bestimmte Anzahl von Messwerten gemittelte Leistung ausgibt. Das zu dieser Berechnung herangezogene Bordspannungssignal 201 wird in einer speziellen Ausgestaltung des Ausführungsbeispiels um eine bestimmte Anzahl von Abtastintervallen verzögert.

Wenn die Zündung eines Kraftfahrzeugs ausgeschaltet ist, sind nur sehr wenige elektrische Systeme aktiv. Durch das Einschalten der Zündung werden zusätzliche elektrische Systeme aktiv. Bei laufendem Motor werden weitere elektrische Systeme wie z.B. elektrisch angetriebene Servolenkung aktiv. Alle diese elektrischen Systeme können Schwankungen der Bordnetzspannung $U_B$ verursachen. Während das Kraftfahrzeug fährt, können Systeme wie z.B. elektrische Fahrwerksregelungen zusätzliche Schwankungen der Bordnetzspannung $U_B$ verursachen. Somit kann man vom Zustand der Zündung, dem Zustand des Antriebsmotors und/oder der Fahrzeuggeschwindigkeit auf die möglicherweise auftretenden Bordnetzschwankungen schließen. Die Erzeugung eines die Intensität der Wechselspannungsanteile kennzeichnende Signal 103 zusätzlich in Abhängigkeit von dem Zustand der Zündung und/oder dem Zustand des Antriebsmotors und/oder der Fahrzeuggeschwindigkeit bringt den Vorteil, dass das Wechselspannungsfilter 210 und der Intensitätsmesser 220 entfallen können und dadurch eine kostengünstigere Realisierung möglich ist.

In einem weiteren Ausführungsbeispiel wird daher das die Intensität der Wechselspannungsanteile kennzeichnende Signal 103 vom Zustand der Zündung beeinflusst. Im Zustand Zündung "EIN" wird das die Intensität der Wechselspannungsanteile kennzeichnende Signal 103 um einen vorbestimmten Wert Z erhöht.

In einem weiteren Ausführungsbeispiel wird das die Intensität der Wechselspannungsanteile kennzeichnende Signal 103 vom Zustand des Antriebsmotors des Kraftfahrzeugs beeinflusst. Im Zustand "Motor läuft" wird das die Intensität der Wechselspannungsanteile kennzeichnende Signal 103 um einen vorbestimmten Wert M erhöht.

In einem weiteren Ausführungsbeispiel wird das die Intensität der Wechselspannungsanteile kennzeichnende Signal 103 von der Fahrzeuggeschwindigkeit des Kraftfahrzeugs beeinflusst. Liegt die Geschwindigkeit des Fahrzeugs oberhalb einer bestimmten Schwelle, dann wird das die Intensität der Wechselspannungsanteile kennzeichnende Signal 103 um einen vorbestimmten Wert G erhöht.

In einem weiteren Ausführungsbeispiel wird das die Intensität der Wechselspannungsanteile kennzeichnende Signal 103 durch Multiplikation der Fahrzeuggeschwindigkeit mit einem Proportionalitätsfaktor berechnet.

**Ermittlung der die Drehzahl des Rotors kennzeichnenden Größe**

Es wird darauf hingewiesen, dass es im Rahmen der Erfindung liegt, die Drehzahl n des Rotors oder Aggregats 2 aus der durch die Stromwendung verursachten Stromwelligkeit zu bestimmen, wie es aus der DE 197 29 238 A1 bekannt ist. In einem anderen Ausführungsbeispiel wird die Drehzahl n des Rotors mit Sensoren erfasst, die eine Impulsfolge ausgeben, deren Periodendauer mit der Drehzahl n korreliert. Solch ein Sensor kann z.B. ein Hallsensor sein, der den magnetischen Fluss eines auf der Rotorachse angeordneten Magnetpolrades erfasst.

**Ansteuerung des Schalters 150 durch den Schwellenvergleicher**

Im Schwellenvergleicher 130 wird das die Intensität der Wechselsignalanteile kennzeichnende Signal 122 mit einer Schwelle 71 verglichen. Liegt das Signal oberhalb dieser Schwelle, dann wird der Schalter 150 in Schalterstellung S1 gebracht, andernfalls in Schalterstellung S2. Die Schwelle 71 wird hierbei in Abhängigkeit von dem die Intensität der Wechselspannungsanteile kennzeichnenden Signal 103 und/oder dem die Drehzahl n des Rotors kennzeichnenden Signal 102 gewählt.

In einem Ausführungsbeispiel wird die Schwelle 71 auf einen vorbestimmten Wert gesetzt. In einem weiteren Ausführungsbeispiel wird die Schwelle 71 in Abhängigkeit des die Intensität der Wechselspannungsanteile kennzeichnende Signal 103 gesetzt. Dadurch lassen sich die Fälle, bei denen die Welligkeit des Motorstroms I durch die Stromwendung verursacht wird, anders behandeln, als die Fälle, bei denen die Welligkeit des Motorstroms I durch Bordnetzspannungswelligkeiten verursacht wird.

In einem weiteren Ausführungsbeispiel wird die Schwelle 71 in Abhängigkeit des die Drehzahl n des Rotors kennzeichnenden Signals 102 gesetzt. Da ab einer bestimmten Drehzahl n die Frequenz der Welligkeit, die durch die Stromwendung verursacht wird, in einem Bereich liegt, der oberhalb der Grenzfrequenz des der Abtastung vorgeschalteten Tiefpasses 6 liegt und somit durch diesen Tiefpass 6 gedämpft wird, kann man ab einer bestimmten Drehzahl n davon ausgehen, dass die Welligkeit des Motorstroms I durch Bordnetzspannungswelligkeiten verursacht wurde. In diesem Fall ist es vorteilhaft die Schwelle 71 anders zu wählen, als in den Fällen, bei denen die Welligkeiten durch die Stromwendung verursacht sind.

**Stellung des Schalters 150**

Der Schalter 150 verbindet in Schalterstellung S1 den Ausgang des Filters 140 mit dem Eingang der Verstelleinrichtung 300 zur Erkennung einer Einklemmsituation mittels der gefilterten Korrelationsgröße 141. In Schalterstellung S2 verbindet er die abgetastete und ungefilterte Korrelationsgröße 101 mit dem Eingang der Verstelleinrichtung 300 zur Erkennung einer Einklemmsituation.

**Patentansprüche**

1. Verfahren zur elektrischen Steuerung und/oder Regelung der Bewegung eines elektrisch betriebenen Aggregats (2) in Kraftfahrzeugen, wobei eine **Korrelationsgröße** (K) für die Verstellkraft des elektrisch betriebenen Aggregats (2) ermittelt wird, welche in Abhängigkeit von einer die Intensität der Wechselsignalanteile der **Korrelationsgröße** (K) kennzeichnenden Größe (122) und/oder von einer die Bordnetzspannungswelligkeit kennzeichnenden Größe (103) und/oder von einer die Drehzahl (n) des Aggregats (2) kennzeichnenden Größe (102) zu steht, und wobei zwecks eines Einklemmschutzes in Abhängigkeit vom Wert der Korrelationsgröße (K) eine Abschaltung oder Reversierung einer Verstellbewegung des Aggregats (2) erfolgt, wobei die Korrelationsgröße (K) in Abhängigkeit von der die Intensität der Wechselsignalanteile der Korrelationsgrösse (K) kennzeichnenden Grösse (122) und/oder der die Bordnetzspannungswelligkeit kennzeichnenden Grösse (103) und/oder der die Drehzahl (n) des Aggregats (2) kennzeichnenden Grösse (102) gefiltert wird.

2. Verfahren nach Anspruch 1, wobei das elektrisch betriebene Aggregat (2) als Fensterheber oder Schiebedach oder Sitzverstellung eines Kraftfahrzeuges realisiert wird.

3. Verfahren nach Anspruch 1 oder 2, bei dem zur Ermittlung der Intensität des Wechselsignalanteils eine Amplitude und/oder eine Funktion eines hochpassgefilterten oder eines bandpassgefilterten Eingangssignals verwendet wird.

4. Verfahren nach einem der vorhergehenden Ansprüche, bei dem ein Wechselsignalanteil von der ermittelten Korrelationsgröße (K) und/oder ein Wechselsignalanteil der Bordnetzspannung ($U_B$) ermittelt wird.

5. Verfahren nach Anspruch 1 oder 2, bei dem bei Vorliegen einer vorgegebenen Betriebsbedingung des Aggregats (2) und/oder des Fahrzeugs eine Filterung der Korrelationsgröße (K) unterbleibt.

6. Verfahren nach einem der vorhergehenden Ansprüche, bei dem bei Überschreiten eines vorgegebenen Grenzwerts der Korrelationsgröße (K) eine Abschaltung oder Reversierung einer Verstellbewegung des Aggregats (2) erfolgt.

7. Verfahren nach einem der vorhergehenden Ansprüche, bei dem zur Ermittlung der Korrelationsgröße (K) für die Verstellkraft der Motorstrom (I) erfasst wird.

8. Verfahren nach einem der vorhergehenden Ansprüche, bei dem zur Ermittlung der Korrelationsgröße (K) die Drehzahl (n) des Aggregats (2) ermittelt wird.

9. Verfahren nach einem der vorhergehenden Ansprüche, bei dem zur Ermittlung der Korrelationsgröße (K) mindestens einer der nachfolgenden oder mehrere Parameter (P1 bis Pn), insbesondere die Bordnetzspannung ($U_B$), der elektrische Widerstand, die Induktivität, die Temperatur, die Maschinenkonstante, der magnetische Fluss und/oder eine Kennlinie des Aggregats (2) verwendet wird bzw. werden.

10. Verfahren nach einem der Ansprüche 2 bis 9, bei dem anhand der Drehzahl (n) bestimmt wird, ob die Einklemmerkennung anhand einer ungefilterten Korrelationsgröße (101) oder einer gefilterten Korrelationsgröße (141) ermittelt wird.

11. Verfahren nach einem der vorherigen Ansprüche, bei dem eine Bordnetzspannung ($U_B$) erfasst wird und zur Ermittlung einer die Intensität einer Bordnetzspannungswelligkeit kennzeichnenden Größe (103) die Amplitude oder eine Funktion der Hochpass gefilterten oder Bandpass gefilterten Bordnetzspannung ($U_B$) verwendet wird.

12. Verfahren nach einem der vorherigen Ansprüche, **dadurch gekennzeichnet, dass** anhand der Fahrzeuggeschwindigkeit eine die Intensität der Bordnetzspannungswelligkeit kennzeichnende Größe (103) ermittelt wird.

13. Verfahren nach einem der vorherigen Ansprüche, bei dem der Zustand der Zündung des Kraftfahrzeugs und/oder das Vorhandensein des Zündschlüssels im Zündschloss für die Erzeugung einer die Intensität der Bordnetzspannungswelligkeit kennzeichnenden Größe (103) verwendet wird.

14. Verfahren nach einem der vorherigen Ansprüche, **dadurch gekennzeichnet, dass** der Zustand des Antriebsmotors des Kraftfahrzeugs und/oder das Drehzahlsignal des Antriebsmotors des Kraftfahrzeugs für die Erzeugung einer die Intensität der Bordnetzspannungswelligkeit kennzeichnenden Größe (103) verwendet wird.

15. Verfahren nach einem der vorherigen Ansprüche **dadurch gekennzeichnet, dass** eine die Rotordrehzahl (n) kennzeichnende Größe (102) durch Frequenzbestimmung der in der ungefilterten Korrelationsgröße (101) enthaltenen Wechselsignalanteile erfolgt.

16. Verfahren nach einem der vorherigen Ansprüche **dadurch gekennzeichnet, dass** zur Ermittlung der Amplitude der Korrelationsgröße (K) der maximale Wert aus einer bestimmten Anzahl von Eingangswerten bestimmt wird.

17. Verfahren nach einem der vorherigen Ansprüche **dadurch gekennzeichnet, dass** zur Bestimmung der Funktion der Korrelationsgröße (K) die gemittelte Leistung aus einer bestimmten Anzahl von Hochpass gefilterten oder Bandpass gefilterten Eingangswerten berechnet wird.

18. Schaltungsanordnung (SA) zur elektrischen Steuerung und/oder Regelung der Bewegung eines elektrisch betriebenen Aggregats (2) in Kraftfahrzeugen, umfassend
eine Erfassungseinheit (1) zur Messung einer Korrelationsgröße (K) für die Verstellkraft des Aggregats (2) und eine Verstelleinrichtung (300) zur Abschaltung oder Reversierung einer Verstellbewegung des Aggregats (2) in Abhängigkeit vom Wert der Korrelationsgröße (K) zwecks eines Einklemmschutzes,
wobei zwischen der Erfassungseinheit (1) und der Verstelleinrichtung (300) eine Filteranordnung (100) zur Filterung der Korrelationsgröße (K) in Abhängigkeit von einer die Intensität der Wechselsignalanteile der Korrelationsgrösse (K) kennzeichnenden Grösse (122) und/oder einer die Bordnetzspannungswelligkeit kennzeichnenden Grösse (103) und/oder einer die Drehzahl (n) des Aggregats (2) kennzeichnenden Grösse (102) angeordnet ist.

19. Schaltungsanordnung nach Anspruch 18, **dadurch gekennzeichnet, dass** das elektrisch betriebene Aggregat (2) ein Fensterheber oder ein Schiebedach oder eine Sitzverstelleinrichtung eines Kraftfahrzeugs ist.

20. Schaltungsanordnung nach Anspruch 18 oder 19, wobei die Filteranordnung (100) einen Wechselsignalfilter (110, 210) zur Bestimmung eines Wechselsignalanteils der Korrelationsgröße (K) und/oder eines Wechselsignalanteils der Bordnetzspannung (UB) umfasst, wobei der Wechselsignalfilter (110, 210) insbesondere als ein Hochpassfilter oder ein Bandpassfilter ausgebildet ist.

21. Schaltungsanordnung nach einem der Ansprüche 18 bis 20, wobei die Filteranordnung (100) einen Filter (140), insbesondere einen Tiefpass-Filter und/oder Bandpass-Filter umfasst.

22. Schaltungsanordnung nach einem der Ansprüche 18 bis 21, wobei die Filteranordnung (100) einen Schwellenvergleicher (130) umfasst.

23. Schaltungsanordnung nach einem der Ansprüche 18 bis 22, wobei dem Filter (140) und dem Wechselsignalfilter (110) die ungefilterte Korrelationsgröße (101) zugeführt wird.

24. Schaltungsanordnung nach einem der Ansprüche 18 bis 23, wobei das Ausgangssignal des Wechselsignalfilters (110) einem Intensitätsmesser (120) zugeführt wird.

25. Schaltungsanordnung nach einem der Ansprüche 18 bis 24, wobei das Ausgangssignal des Intensitätsmessers (120) dem Schwellenvergleicher (130) zugeführt wird.

26. Schaltungsanordnung nach einem der Ansprüche 18 bis 25, wobei ein die Drehzahl (n) des Rotors kennzeichnendes Signal (102) dem Schwellenvergleicher (130) zugeführt wird.

27. Schaltungsanordnung nach einem der Ansprüche 18 bis 26, wobei das ein die Intensität der Bordnetzspannungswelligkeit kennzeichnendes Signal (103) dem Schwellenvergleicher (130) zugeführt wird.

28. Schaltungsanordnung nach einem der Ansprüche 18 bis 27, wobei das Ausgangssignal des Schwellenvergleichers (130) die Schalterstellung eines Schalters (150) bestimmt.

29. Schaltungsanordnung nach einem der Ansprüche 18 bis 28, wobei der Schalter (150) in seiner Stellung (S1) der Verstelleinrichtung (300) die gefilterte Korrelationsgröße (141) zuführt.

30. Schaltungsanordnung nach einem der Ansprüche 18 bis 29, wobei der Schalter (150) in seiner Stellung (S2) der Verstelleinrichtung (300) die ungefilterte Korrelationsgröße (101) zuführt.

**Claims**

1. Method for the electrical control and/or regulation of the movement of an electrically driven unit (2) in motor vehicles, wherein a correlation quantity (K) for the adjusting force of the electrically driven unit (2) is determined that is dependent on a quantity (122) characterizing the intensity of the alternating-signal components of the correlation quantity (K) and/or on a quantity (103) characterizing the ripple of the voltage of the electrical supply system of the vehicle and/or on a quantity (102) characterizing the speed (n) of the unit (2), and wherein, in order to prevent jamming, an adjusting movement of the unit (2) is stopped or reversed in dependence on the value of the correlation quantity (K), wherein the correlation quantity (K) is filtered in dependence on the quantity (122) characterizing the intensity of the alternating-signal components of the correlation quantity (K) and/or on the quantity (103) characterizing the ripple of the voltage of the electrical supply system of the vehicle and/or on the quantity (102) characterizing the speed (n) of the unit (2).

2. Method according to claim 1, wherein the electrically driven unit (2) is realized as a window winder or a sunroof or a seat adjustment device of a motor vehicle.

3. Method according to claim 1 or 2, in which an amplitude and/or a function of a high-pass-filtered or of a band-pass-filtered input signal is used for determining the intensity of the alternating-signal component.

4. Method according to any one of the preceding claims, in which an alternating-signal component of the determined correlation quantity (K) and/or an alternating-signal component of the voltage ($U_B$) of the electrical supply system of the vehicle is determined.

5. Method according to claim 1 or 2, in which the correlation quantity (K) is not filtered in the presence of a predetermined operational condition of the unit (2) and/or of the vehicle.

6. Method according to any one of the preceding claims, in which an adjusting movement of the unit (2) is stopped or reversed if a predetermined limiting value of the correlation quantity (K) is exceeded.

7. Method according to any one of the preceding claims, in which the motor current (I) is picked up for determining the correlation quantity (K) for the adjusting force.

8. Method according to any one of the preceding claims, in which the speed (n) of the unit (2) is determined for determining the correlation quantity (K).

9. Method according to any one of the preceding claims, in which at least one of the following or several parameters (P1 to Pn), in particular the voltage ($U_B$) of the electrical supply system of the vehicle, the electrical resistance, the inductance, the temperature, the specific torque coefficient, the magnetic flux and/or a characteristic of the unit (2) is/are used for determining the correlation quantity (K).

10. Method according to any one of claims 2 to 9, in which the speed (n) is the basis for determining as to whether the recognition of a jamming situation is determined on the basis of an unfiltered correlation quantity (101) or of a filtered correlation quantity (141).

11. Method according to any one of the preceding claims, in which a voltage ($U_B$) of the electrical supply system of the vehicle is picked up, and the amplitude or a function of the high-pass-filtered or band-pass-filtered voltage ($U_B$) of the electrical supply system of the vehicle is used for determining a quantity (103) characterizing the intensity of a ripple of the voltage of the electrical supply system of the vehicle.

12. Method according to any one of the preceding claims, **characterized in that** a quantity (103) characterizing the intensity of the ripple of the voltage of the electrical supply system of the vehicle is determined on the basis of the speed of the vehicle.

13. Method according to any one of the preceding claims, in which the state of the ignition system of the motor vehicle and/or the presence of the ignition key in the ignition lock is/are used for generating a quantity (103) characterizing the intensity of the ripple of the voltage of the electrical supply system of the vehicle.

14. Method according to any one of the preceding claims, **characterized in that** the state of the driving engine of the motor vehicle and/or the speed signal of the driving engine of the motor vehicle is/are used for generating a quantity (103) characterizing the intensity of the ripple of the voltage of the electrical supply system of the vehicle.

15. Method according to any one of the preceding claims, **characterized in that** a quantity (102) characterizing the rotor speed (n) is determined by determining the frequency of the alternating-signal components that are included in the unfiltered correlation quantity (101).

16. Method according to any one of the preceding claims, **characterized in that** the maximum value of a certain number of input values is determined for determining the amplitude of the correlation quantity (K).

17. Method according to any one of the preceding claims, **characterized in that** the mean power of a certain number of high-pass-filtered or band-pass-filtered input values is calculated for determining the function of the correlation quantity (K).

18. Circuit arrangement (SA) for the electrical control and/or regulation of the movement of an electrically driven unit (2) in motor vehicles, comprising
an acquisition unit (1) for measuring a correlation quantity (K) for the adjusting force of the unit (2) and
an adjusting device (300) for stopping or reversing an adjusting movement of the unit (2) in dependence on the value of the correlation quantity (K) in order to prevent jamming,
wherein a filter arrangement (100) for filtering the correlation quantity (K) in dependence on a quantity (122) characterizing the intensity of the alternating-signal components of the correlation quantity (K) and/or on a quantity (103) characterizing the ripple of the voltage of the electrical supply system of the vehicle and/or on a quantity (102) characterizing the speed (n) of the unit (2) is arranged between the acquisition unit (1) and the adjusting device (300).

19. Circuit arrangement according to claim 18, **characterized in that** the electrically driven unit (2) is a window winder or a sunroof or a seat adjustment device of a motor vehicle.

20. Circuit arrangement according to claim 18 or 19, wherein the filter arrangement (100) comprises an alternating-signal filter (110, 210) for determining an alternating-signal component of the correlation quantity (K) and/or an alternating-signal component of the voltage ($U_B$) of the electrical supply system of the vehicle, wherein the alternating-signal filter (110, 210) is configured particularly as a high-pass filter or a band-pass filter.

21. Circuit arrangement according to any one of claims 18 to 20, wherein the filter arrangement (100) comprises a filter (140), in particular a low-pass filter and/or a band-pass filter.

22. Circuit arrangement according to any one of claims 18 to 21, wherein the filter arrangement (100) comprises a threshold comparator (130).

23. Circuit arrangement according to any one of claims 18 to 22, wherein the unfiltered correlation quantity (101) is supplied to the filter (140) and to the alternating-signal filter (110).

24. Circuit arrangement according to any one of claims 18 to 23, wherein the output signal of the alternating-signal filter (110) is supplied to an intensity-measuring device (120).

25. Circuit arrangement according to any one of claims 18 to 24, wherein the output signal of the intensity-measuring device (120) is supplied to the threshold comparator (130).

26. Circuit arrangement according to any one of claims 18 to 25, wherein a signal (102) characterizing the speed (n) of the rotor is supplied to the threshold comparator (130).

27. Circuit arrangement according to any one of claims 18 to 26, wherein a signal (103) characterizing the intensity of the ripple of the voltage of the electrical supply system of the vehicle is supplied to the threshold comparator (130).

28. Circuit arrangement according to any one of claims 18 to 27, wherein the output signal of the threshold comparator (130) determines the switch position of a switch (150).

29. Circuit arrangement according to any one of claims 18 to 28, wherein the switch (150) in its position (S1) supplies the filtered correlation quantity (141) to the adjusting device (300).

30. Circuit arrangement according to any one of claims 18 to 29, wherein the switch (150) in its position (S2) supplies the unfiltered correlation quantity (101) to the adjusting device (300).

**Revendications**

1. Procédé de commande et/ou de régulation électrique du mouvement d'un groupe (2) entraîné électriquement dans des véhicules automobiles, une grandeur de corrélation (K) étant déterminée pour la force de déplacement du groupe (2) entraîné électriquement et étant fonction d'une grandeur (122) caractérisant l'intensité des fractions de signaux variables de la grandeur de corrélation (K) et/ou d'une grandeur (103) caractérisant l'ondulation de la tension de bord et/ou d'une grandeur (102) caractérisant la vitesse de rotation (n) du groupe (2), et un arrêt ou une inversion du mouvement de déplacement du groupe (2) intervenant, pour assurer une protection contre le coincement, en fonction de la valeur de la grandeur de corrélation (K), la grandeur de corrélation (K) étant filtrée en fonction de la grandeur (122) caractérisant l'intensité des fractions de signaux variables de la grandeur de corrélation (K) et/ou de la grandeur (103) caractérisant l'ondulation de la tension de bord et/ou de la grandeur (102) caractérisant vitesse de rotation (n) du groupe (2).

2. Procédé selon la revendication 1, le groupe (2) entraîné électriquement étant réalisé en tant que lève-vitre ou toit coulissant ou réglage de siège d'un véhicule automobile.

3. Procédé selon la revendication 1 ou 2, dans lequel, pour déterminer l'intensité de la fraction de signaux variables, une amplitude et/ou une fonction d'un signal d'entrée filtré par filtre passe-haut ou d'un signal d'entrée filtré par filtre passe-bande est utilisée.

4. Procédé selon l'une des revendications précédentes, dans lequel une fraction de signaux variables de la grandeur de corrélation (K) déterminée et/ou une fraction de signaux variables de la tension de bord ($U_B$) est déterminée.

5. Procédé selon la revendication 1 ou 2, dans lequel, en présence d'une condition de fonctionnement prédéfinie du groupe (2) et/ou du véhicule, un filtrage de la grandeur de corrélation (K) n'est pas effectué.

6. Procédé selon l'une des revendications précédentes, dans lequel, lors du dépassement d'une valeur limite prédéfinie de la grandeur de corrélation (K), il se produit un arrêt ou une inversion d'un mouvement de déplacement du groupe (2).

7. Procédé selon l'une des revendications précédentes, dans lequel le courant de moteur (I) est détecté pour la détermination de la grandeur de corrélation (K) pour la force de déplacement.

8. Procédé selon l'une des revendications précédentes, dans lequel la vitesse de rotation (n) du groupe (2) est déterminée pour déterminer la grandeur de corrélation (K).

9. Procédé selon l'une des revendications précédentes, dans lequel, pour déterminer la grandeur de corrélation (K), au moins un des paramètres suivants ou plusieurs paramètres (P1 à Pn), en particulier la tension de bord ($U_B$), la résistance électrique, l'inductance, la température, la constante de machine, le flux magnétique et/ou une courbe caractéristique du groupe (2) est ou sont utilisés.

**10.** Procédé selon l'une des revendications 2 à 9, dans lequel il est défini, à l'aide de la vitesse de rotation (n), si l'identification du coincement est déterminée à l'aide d'une grandeur de corrélation non filtrée (101) ou d'une grandeur de corrélation filtrée (141).

**11.** Procédé selon l'une des revendications précédentes, dans lequel une tension de bord ($U_B$) est détectée et, pour déterminer une grandeur (103) caractérisant l'intensité d'une ondulation de la tension de bord, l'amplitude ou une fonction de la tension de bord ($U_B$) filtrée par filtre passe-haut ou filtrée par filtre passe-bande est utilisée.

**12.** Procédé selon l'une des revendications précédentes, **caractérisé en ce que**, à l'aide de la vitesse du véhicule, une grandeur (103) caractérisant l'intensité de l'ondulation la tension de bord est déterminée.

**13.** Procédé selon l'une des revendications précédentes, dans lequel l'état de l'allumage du véhicule automobile et/ou la présence de la clé de contact dans la serrure de contact est utilisé(e) pour la production d'une grandeur (103) caractérisant l'intensité de l'ondulation de la tension de bord.

**14.** Procédé selon l'une des revendications précédentes, **caractérisé en ce que** l'état du moteur d'entraînement du véhicule automobile et/ou le signal de vitesse de rotation du moteur d'entraînement du véhicule automobile est utilisé pour la production d'une grandeur (103) caractérisant l'intensité de l'ondulation de la tension de bord.

**15.** Procédé selon l'une des revendications précédentes, **caractérisé en ce qu'**une grandeur (102) caractérisant la vitesse de rotation (n) s'effectue par la définition de la fréquence des fractions de signaux variables contenues dans la grandeur de corrélation non filtré (101).

**16.** Procédé selon l'une des revendications précédentes, **caractérisé en ce que**, pour la détermination de l'amplitude de la grandeur de corrélation (K), la valeur maximale est définie à partir d'un nombre défini de valeurs d'entrée.

**17.** Procédé selon l'une des revendications précédentes, **caractérisé en ce que**, pour la définition de la fonction de la grandeur de corrélation (K), la puissance moyennée est calculée à partir d'un nombre défini de valeurs d'entrée filtrées par filtre passe-haut ou filtrées par filtre passe-bande.

**18.** Agencement de circuit (SA) pour la commande et/ou la régulation électrique du mouvement d'un groupe (2) entraîné électriquement dans des véhicules automobiles, comprenant
une unité de détection (1) pour la mesure d'une grandeur de corrélation (K) pour la force de déplacement du groupe (2) et
un dispositif de déplacement (300) pour l'arrêt ou l'inversion d'un mouvement de déplacement du groupe (2) en fonction de la valeur de la grandeur de corrélation (K) pour assurer la protection contre le coincement,
un agencement de filtrage (100) étant disposé entre l'unité de détection (1) et le dispositif de déplacement (300) pour filtrer la grandeur de corrélation (K) en fonction d'une grandeur (122) caractérisant l'intensité des fractions de signaux variables de la grandeur de corrélation (K) et/ou en fonction d'une grandeur (103) caractérisant l'intensité de l'ondulation de la tension de bord et/ou d'une grandeur (102) caractérisant la vitesse de rotation (n) du groupe (2).

**19.** Agencement de circuit selon la revendication 18, **caractérisé en ce que** le groupe (2) entraîné électriquement est un lève-vitre ou un toit coulissant ou un réglage de siège d'un véhicule automobile.

**20.** Agencement de circuit selon la revendication 18 ou 19, l'agencement de filtrage (100) englobant un filtre de signaux variables (110, 210) pour définir une fraction de signaux variables de la grandeur de corrélation (K) et/ou une fraction de signaux variables de la tension de bord ($U_B$), le filtre de signaux variables (110, 210) étant en particulier constitué en tant que filtre passe-haut ou filtre passe-bande.

**21.** Agencement de circuit selon une des revendications 18 à 20, l'agencement de filtrage (100) comprenant un filtre (140), en particulier un filtre passe-bas et/ou un filtre passe-bande.

**22.** Agencement de circuit selon une des revendications 18 à 21, l'agencement de filtrage (100) comprenant un comparateur avec seuil (130).

**23.** Agencement de circuit selon une des revendications 18 à 22, la grandeur de corrélation non filtrée (101) étant conduite au filtre (140) et au filtre de signaux variables (110).

**24.** Agencement de circuit selon une des revendications 18 à 23, le signal de sortie du filtre de signaux variables (110) étant conduit à un appareil de mesure d'intensité (120).

**25.** Agencement de circuit selon une des revendications 18 à 24, le signal de sortie de l'appareil de mesure d'intensité (120) étant conduit au comparateur avec seuil (130).

**26.** Agencement de circuit selon une des revendications 18 à 25, un signal (102) caractérisant la vitesse de rotation (n) du rotor étant conduit au comparateur avec seuil (130).

**27.** Agencement de circuit selon une des revendications 18 à 26, le signal (103) caractérisant l'intensité de l'ondulation de la tension de bord étant conduit au comparateur avec seuil (130).

**28.** Agencement de circuit selon une des revendications 18 à 27, le signal de sortie du comparateur avec seuil (130) définissant la position d'interrupteur d'un interrupteur (150).

**29.** Agencement de circuit selon une des revendications 18 à 28, l'interrupteur (150), dans sa position (S1), conduisant la grandeur de corrélation filtrée au dispositif de déplacement (300).

**30.** Agencement de circuit selon une des revendications 18 à 29, l'interrupteur (150), dans sa position (S2), conduisant la grandeur de corrélation non filtrée (101) au dispositif de déplacement (300).

Fig. 1

Fig. 2

Fig. 3

Fig. 4

# Fig. 5

# Fig. 6

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4442171 A1
- WO 17982 A1
- DE 19729238 C1
- WO 0043277 A1
- DE 19729238 A1